# EUROPÄISCHE PATENTSCHRIFT

(11) **EP 0 347 785 B1**
(45) Veröffentlichungstag und Bekanntmachung des Hinweises auf die Patenterteilung: **12.01.1994**
(21) Anmeldenummer: 89111044.7
(22) Anmeldetag: 19.06.1989
(51) Int. Cl.: C09D 5/44

(54) **Kathodisch abscheidbare Elektrotauchlacke**
Cathodically depositable electrodip paints
Peintures électrophorétiques déposables à la cathode

(30) Priorität: 24.06.1988 AT 1638/88
(43) Veröffentlichungstag der Anmeldung: 27.12.1989
(73) Patentinhaber: VIANOVA KUNSTHARZ AKTIENGESELLSCHAFT, A-8011 Graz (AT)
(72) Erfinder: Paar, Willibald, Dr., A-8010 Graz (AT)

(56) Entgegenhaltungen:
- EP-A- 0 268 051
- EP-A- 0 336 283
- DE-A- 2 554 080
- DE-A- 2 752 198

## Beschreibung

Die Erfindung betrifft kathodisch abscheidbare Elektrotauchlacke mit hervorragender Korrosionsschutzwirkung auf nicht vorbehandeltem Stahlblech.

Kathodisch abscheidbare Lacke weisen in der Regel auf zinkphosphatierten Substraten einen sehr guten Korrosionsschutz auf. Eine auf nicht vorbehandelten Stahlblechen (=Blankblechen) ausreichende Korrosionsbeständigkeit ist bei den bekannten Produkten nur durch Zugabe von Bleiverbindungen zu erhalten.

Alle derzeit für diesen Zweck eingesetzten Bleiverbindungen haben jedoch in kathodisch abscheidbaren Elektrotauchlacken wesentliche Nachteile. Die als feste Stoffe eingesetzten Bleiverbindungen (Bleioxid bzw. basisches Bleisilikat) werden erst im Lack gelöst. Die Lacke bedürfen daher längerer Homogenisierungszeiten, bis die entsprechende Wirksamkeit des Bleisalzes als Katalysator gegeben ist. Die dabei gebildeten wasserlöslichen Salze befinden sich - ebenso wie andere dem Lack unmittelbar zugesetzte wasserlösliche Salze - zu einem wesentlichen Teil nicht in der Harzmicelle, sondern in der wäßrigen Phase des Lackes. Sie werden bei der elektrischen Abscheidung durch den im Film auftretenden Endosmoseeffekt, welcher eine Entwässerung des Filmes bewirkt, aus dem Film ausgewaschen oder auf dem Substrat als metallischer Niederschlag abgeschieden. Gelöste Salze werden überdies anteilig durch die bei Elektrotauchlackieranlagen eingesetzten Dialysevorrichtungen aus dem Bad entfernt und gegebenenfalls bei den Spülvorgängen in unkontrollierter Weise wieder ins Bad rückgeführt.

Die nichtwasserlöslichen Bleisalze längerkettiger Fettsäuren sind im Harz löslich und verbleiben daher weitgehend in der Harzmicelle. Durch Hydrolyse entstehen jedoch titrierbare Mengen an wasserunlöslichen Fettsäuren, durch welche das Abscheidungsverhalten und die Badführung bei der Elektrotauchlackierung erheblich gestört werden.

Für die kathodische Elektrotauchlackierung geeignete Bleikatalysatoren sind in der EP-A1-0268051 beschrieben, wobei die bisherigen Nachteile durch die Verwendung von Umsetzungsprodukten aus Blei(II)oxid und β-Hydroxyalkylaminogruppen aufweisenden Verbindungen überwunden werden.

Die Verwendung von Bleiverbindungen in Lacken wird in zunehmendem Maße von der Industrie aufgrund der Toxizität dieser Verbindungen und der damit verbundenen Entsorgungsprobleme abgelehnt. Andererseits stellt jedoch der ausreichende Blankblechkorrosionsschutz eine unabdingliche Forderung der Verbraucher kathodisch abscheidbarer Elektrotauchlacke, insbesonders in der Automobilindustrie, dar.

In der EP-A2-0336283 werden basische Metallkomplexe beschrieben, die den Blankblechkorrosionsschutz wesentlich verbessern. Diese basischen Metallverbindungen beeinträchtigen jedoch die Schichtstärken des abgeschiedenen Films und erhöhen im allgemeinen die Leitfähigkeit des kathodisch Elektrotauchlackes.

In der DE-OS-2752198 wird eine wäßrige Lackzubereitung beansprucht, die ein kationisches Lackbindemittel und mindestens eine organische Titanverbindung enthält. In einer bevorzugten Ausführungsform kann das Lackbindemittel zumindest teilweise mit der organischen Titanverbindung umgesetzt worden sein. Die in den Beispielen angeführten Reaktionsbedingungen lassen jedoch erkennen, daß die als Ausgangsprodukte verwendeten monomeren organischen Titanverbindungen an das Lackbindemittel nicht chemisch gebunden werden und somit spätestens bei der Herstellung des mit Wasser verdünnten Elektrotauchlacks einer Hydrolyse unterworfen wären.

Es wurde nun gefunden, daß bleifreie kationische Lakke, die Filme mit einem ausgezeichneten Blankblechkorrosionsschutz und hervorragendem Schichtaufbau ergeben, formuliert werden können, wenn die Bindemittel mit hydrolysebeständigen titanhältigen Verbindungen kombiniert werden, welche durch Umsetzung eines Tetraalkylorthotitanates und/oder Titanacetylacetonates mit NH-funktionellen β-Hydroxyalkylaminen und nach anschließender Reaktion mit Formaldehyd unter Entfernung des entstehenden Alkohols und/oder Acetylacetons erhalten wurden.

Die Erfindung betrifft demgemäß wasserverdünnbare, kathodisch abscheidbare Elektrotauchlacke, welche dadurch gekennzeichnet sind, daß sie als Bindemittel in partiell oder vollständig neutralisierter Form
(A) 70 bis 99,5 Gew.-%, vorzugsweise 80 bis 95 Gew.-%, eines kationischen filmbildenden Harzes sowie eines gegebenenfalls anteilig vorhandenen Zusatzharzes und/oder Pigmentanreibeharzes und
(B) 0,5 bis 30 Gew.-%, vorzugsweise 5 bis 20 Gew.-%, eines Umsetzungsproduktes eines Tetraalkylorthotitanates und/oder eines Titanacetylacetonates mit NH-funktionellen β-Hydroxyalkylaminverbindungen und anschließender Reaktion mit Formaldehyd unter Entfernung des entstehenden Alkohols und/oder Acetylacetons
enthalten, mit der Maßgabe, daß der Titangehalt der Kombination, bezogen auf Bindemittelfestkörpergehalt, 0,03 bis 3,0, vorzugsweise 0,1 bis 1,0, Gew.-% beträgt.

Die als Komponente (A) eingesetzten kationischen filmbildenden Harze sind in großer Anzahl aus der Fachliteratur bekannt. Es handelt sich dabei um basische Gruppen aufweisende Polykondensationsharze, Polymerisationsharze oder Polyadditionsharze. Die bevorzugten Harze basieren auf Polyepoxidharzen, die als deren Umsetzungsprodukte mit Aminoalkylierungsprodukten von Phenolen oder als Epoxidharz-Amin-Addukte in der Praxis verwendet werden.

Die erfindungsgemäß als Komponente (B) vorliegenden Titanverbindungen werden durch Umsetzung eines Tetraalkylorthotitanates und/oder eines Titanacetylacetonates mit NH-funktionellen β-Hydroxyalkylaminen und nach anschließender Reaktion mit Formaldehyd unter Entfernung des entstehenden Alkohols und/oder Acetylacetons erhalten. Als Titanverbindungen werden Tetraalkylorthotitanate oder Titanacetylacetonate der Formel Ti(O-alkyl)ₙ(acetylacetonat)₂ (n = 0 oder 2), wie sie im Handel erhältlich sind, verwendet.

Als NH-funktionelle Alkanolaminverbindungen können Monomethylethanolamin und dessen Homologe, sowie Umsetzungsprodukte von primären Monoaminen, Diaminen oder Polyaminen mit Epoxidverbindungen oder Umsetzungsprodukte von primären Alkanolaminen mit Acrylatverbindungen eingesetzt werden.

Bevorzugt werden Verbindungen verwendet, mittels derer aliphatische Molekülgruppen in die entstehende Titanverbindung eingebaut werden, z. B. NH-funktionelle Alkanolamine, die durch Umsetzung von primären Aminen mit aliphatischen Mono- oder Diepoxidverbindungen erhalten werden.

Die Herstellung der erfindungsgemäß vorliegenden Titanverbindungen erfolgt durch Umsetzung der NH-funktionellen Alkanolaminverbindung mit dem Tetraalkylorthotitanat oder dem Titanacetylacetonat under Abspaltung des entstehenden Alkohols und/oder Acetylacetons bei 60 bis 120°C. Anschließend wird Formaldehyd, vorzugsweise in Form des Paraformaldehyds, zugegeben und das Reaktionsgemisch bis zur völligen Homogenisierung auf einer Temperatur von 80 bis 100°C gehalten. Schließlich erfolgt die Entfernung des bei der Reaktion mit der N-Methylolgruppe entstehenden Alkohols oder Acetylacetons aus der Titanverbindung.

Die Titanverbindungen sind auch in der Kälte mit den verschiedenen kationischen Materialien auf der Basis von Kondensations-, Polymerisations- und Polyadditionsharzen einwandfrei verträglich. Durch ihre organophilen Molekülsegmente verbleiben sie im verdünnten wäßrigen Lackmaterial in der Harzphase und damit auch in einem durch die Endosmose bei der Elektrotauchlackierung weitgehend entwässerten Film. Die Produkte unterliegen bei längerer Lagerung bzw. in der Elektrotauchlackieranlage keiner hydrolytischen Spaltung. Die gegebenenfalls beim Einbrennen auftretenden Spaltprodukte sind flüchtig und ökologisch harmlos.

Die erfindungsgemäß vorliegenden Titanverbindungen können dem Basisharz zu jedem Zeitpunkt der Herstellung des Lackes zugesetzt werden. Die Zugabe kann in konzentrierter Form zum Bindemittel, zu einem eventuell eingesetzten Pigmentanreibeharz oder zur Pigmentpaste erfolgen. Bei Vorhandensein eventuell protonierbarer Gruppen können die Verbindungen aber auch in neutralisierter und mit Wasser und/oder Hilfslösemitteln verdünnter Form dem verdünnten Lackmaterial zugesetzt werden. Bei der Elektrotauchlackierung kann gegebenenfalls die verdünnte wäßrige Lösung der Titanverbindung auch während des Betriebes dem Badmaterial zugesetzt werden.

Die erfindungsgemäß vorliegenden Titanverbindungen werden in einer Menge verwendet, daß der Titangehalt, bezogen auf den Bindemittelfestkörper, 0,03 bis 3,0 %, vorzugsweise 0,1 bis 1,0 %, beträgt.

Die folgenden Beispiele erläutert die Erfindung, ohne sie in ihrem Umfang zu beschränken. Alle Angaben in Teilen oder Prozenten beziehen sich, soferne nichts anderes angegeben ist, auf Gewichtseinheiten.

### Herstellung der Komponente A

### Komponente A 1

228 Tle Bisphenol A (1 Mol) werden mit 260 Tlen Diethylaminopropylamin (2 Mol) und 66 Tlen Paraformaldehyd, 91 % (2 Mol) in Gegenwart von 131 Tlen Toluol als Azeotropschleppmittel bis zur Abtrennung von 42 Tlen Reaktionswasser umgesetzt. Nach Kühlen auf 30°C werden innerhalb 45 Minuten 608 Tle (2,0 Mol) eines mit 2-Ethylhexanol halbblockierten Toluylendiisocyanats zugegeben. Sobald ein NCO-Wert von praktisch 0 erreicht ist, wird das Produkt in 152 Tlen Diethylenglykoldimethylether gelöst.

1400 Tle dieser Lösung werden mit einer Lösung von 190 Tlen eines Epoxidharzes auf Basis von Bisphenol A (Epoxidäquivalentgewicht ca. 190) und 250 Tlen (1 Mol) eines Glycidylesters einer gesättigten, tertiären C₉ - C₁₁-Monocarbonsäure in 389 Tlen Diethylenglykoldimethylether versetzt und bei 95 bis 100°C bis zu einem Epoxidwert von 0 umgesetzt. Das Produkt ist nach Zusatz von 40 Millimol Ameisensäure pro 100 g Festharz einwandfrei mit Wasser verdünnbar.

### Komponente A 2

500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt und mit 97 Tlen 3 n-Ameisensäure partiell neutralisiert.

70 Tle Festharz dieses Bindemittels werden anschließend mit 30 Tlen Festharz der nachfolgend beschriebenen Härtungskomponente bei 60°C 1 Stunde homogenisiert.

Herstellung der Vernetzungskomponente: 396 Tle Malonsäuredimethylester und 134 Tle Trimethylolpropan werden in Gegenwart von 1,1 Tlen Zinkoctoat (8 % Metallgehalt) bei 130°C ca. 10 Stunden lang umgesetzt, wobei etwa 90 Tle Methanol als Destillat entweichen. Der fertige polyfunktionelle Ester ist eine farblose Flüssigkeit mit einer Hydroxylzahl von 16 mg KOH/g.

### Komponente A 3

In einem mit Rührer, Thermometer und Rückflußkühler ausgestatteten Reaktionsgefäß werden 1000 Tle eines Epoxidharzes auf Bisphenol A-Basis (Epoxidäquivalent ca. 500) in 492 Tlen Ethylglykolacetat bei 60 bis 70°C gelöst, 0,2 Tle Hydrochinon und 144 Tle Acrylsäure zugegeben und die Temperatur auf 100 bis 110°C gesteigert. Die Reaktion wird bei dieser Temperatur bis zu einer Säurezahl von unter 5 mg KOH/g geführt (DBZ = 1,75). Anschließend wird das Reaktionsprodukt bei 60 bis 70°C mit 652 Tlen BMI (70 %) ^{*)} versetzt und bis zu einem NCO-Wert von praktisch Null reagiert (DBZ = 1,25, BNZ = 1,1).
^{*)} Basisches Monoisocyanat aus 1 Mol Toluylendiisocyanat und 1 Mol Diethanolamin (70%ig in Methylisobutylketon)

DBZ: Doppelbindungszahl: entspricht der Anzahl der endständigen ethylenischen Doppelbindungen pro 1000 Molekulargewichtseinheiten.

BNZ: Basenzahl: entspricht der Anzahl der basischen N-Gruppierungen pro 1000 Molekulargewichtseinheiten.

### Komponente A 4

700 Tle B 180 ^{**)} werden in bekannter Weise in Gegenwart von 0,5 Tlen Diphenylparaphenylendiamin (Inhibitor) bei 200°C mit 100 Tlen Maleinsäureanhydrid so lange reagiert, bis dieses vollständig gebunden ist. Nach Kühlen auf 100°C werden 130 Tle 2-Ethylhexanol zugesetzt und bei 120°C bis zum Erreichen der theoretischen Säurezahl des Halbesters verestert (MAD A).
^{**)} B 180 ist ein flüssiges Polybutadienöl (ca. 75 % 1,4 cis-, ca. 24 % 1,4-trans- und ca. 1 % Vinyldoppelbindungen; Molekulargewicht ca. 1500 ± 15 %; Jodzahl ca. 450 g / 100 g).

110 Tle MAD A (entsprechend ca. 0,12 (COOH-Gruppen) werden mit 212 Tlen eines Bisphenol A-Diepoxidharzes (Epoxidäquivalent ca. 190) in 80%iger Lösung in Diethylenglykoldimethylether bei 120°C bis zu einer Säurezahl von praktisch Null umgesetzt. Nach Zusatz von 108 Tlen Diethylenglykoldimethylether, 59 Tlen Diethylaminopropylamin (0,45 Mol) und 59 Tlen 2-Ethylhexylamin (0,45 Mol) wird der Ansatz bei 65 bis 70°C bis zu einem Epoxidwert von praktisch Null reagiert. Nach Erreichen dieses Wertes werden 114 Tle Bisphenol A (0,5 Mol) und 50 Tle Paraformaldehyd, 91 % (1,5 Mol) zugegeben und die Reaktion bei 60°C bis zum Erreichen eines Gehaltes an freiem Formaldehyd von 0,5 bis 1 % geführt.

### Herstellung der Komponente (B)

Als NH-funktionelle β-Hydroxyalkylaminverbindungen für die Herstellung der Komponenten (B) werden folgende Verbindungen verwendet:
- HYAM 1: Umsetzungsprodukt eines Mols 2-Ethylhexylamin mit einem Mol 2-Ethylhexylglycidylethyl (MG = 315)
- HYAM 2: Umsetzungsprodukt eines Mols 1,6-Hexamethylendiamin mit 2 Mol Decenoxid (MG = 488)
- HYAM 3: Umsetzungsprodukt eines Mols Monoethanolamin mit einem Mol 2-Ethylhexylacrylat (MG = 245)
- HYAM 4: N-Methylethanolamin
- HYAM 5: Umsetzungsprodukt eines Diepoxidharzes auf Basis Polypropylenglykol (Epoxidäquivalent ca. 320) mit n-Butylamin (MG = 786)
Die Mengenverhältnisse der Ausgangsprodukte sowie der resultierende Titangehalt sind in Tab. 1 zusammengefaßt.

**Tab. 1**

| | Tle Amin | Tle Titanverbindung | Tle FA | %ig in MP | Titangehalt % (bez. auf FH) |
|---|---|---|---|---|---|
| B 1 | 630 HYAM 1 | 346 TiAc | 66 | 90 | 6,8 |
| B 2 | 488 HYAM 1 | 680 BuTi | 132 | 80 | 12,3 |
| | 150 HYAM 4 | | | | |
| B 3 | 490 HYAM 3 | 340 BuTi | 66 | 80 | 8,5 |
| B 4 | 630 HYAM 1 | 692 TiAc | 132 | 90 | 6,2 |
| | 786 HYAM 5 | | | | |
| B 5 | 315 HYAM 1 | 680 BuTi | 132 | 70 | 9,4 |
| | 488 HYAM 2 | | | | |
| | 75 HYAM 4 | | | | |
| BuTi = Butyltitanat Tiac = Ti(O-Butyl)₂(acetylacetonat)₂ FA = Paraformaldehyd 91%ig | | | | | |

### Herstellung der pigmentierten erfindungsgemäßen Lacke L1 bis L5

Aus Kombinationen der Komponenten A1 bis A4 mit B1 bis B5 werden unter Verwendung einer Pigmentmischung aus 1 Tl Farbruß und 99 Tlen Titandioxid die in Tab. 2 angegebenen Lacke hergestellt. Die Einstellung des Lackfestkörpers erfolgt mit deionisiertem Wasser, das Pigment-Bindemittel-Verhältnis der Lacke L1 - L5 beträgt 0,5 : 1, der Lackfestkörper jeweils 20 %.

**Tabelle 2**

| Lack Nr. | Tle Festharz A | Tle Festharz B | % Ti/FH | Neutralisation¹⁾ |
|---|---|---|---|---|
| L1 | 95 A 1 | 5 B 1 | 0,34 | 45 |
| L2 | 92 A 4 | 8 B 2 | 0,98 | 45 |
| L3 | 95 A 3 | 5 B 3 | 0,43 | 60 |
| L4 | 85 A 1 | 15 B 4 | 0,93 | 45 |
| L5 | 90 A 2 | 10 B 5 | 0,94 | 45 |

| | | | | |
|---|---|---|---|---|
| ¹⁾ Millimol Ameisensäure pro 100 g Festharz | | | | |

### Prüfung der erfindungsgemäßen Lacke L1 bis L5

Die Abscheidung erfolgt auf ein als Kathode geschaltetes, nicht phosphatiertes Stahlblech bei Bedingungen, unter welchen eine Trockenfilmstärke von 20 ± 2 µm erhalten wird. Die Härtung erfolgt durch Einbrennen im Umluftofen (25 Minuten/170°C).

Die in der Tabelle 3 angegebenen Prüfwerte für den Salzsprühtest (ASTM B 117-73) geben den Angriff am Kreuzschnitt in Millimeter nach 240 Stunden an.

**Tabelle 3**

| | Salzsprühtest mm/240 Stunden | |
|---|---|---|
| L1 | weniger als | 1 |
| L2 | weniger als | 1 |
| L3 | weniger als | 2 |
| L4 | weniger als | 0,5 |
| L5 | weniger als | 0,5 |

## Patentansprüche (Patentansprüche für folgende(n) Vertragsstaat(en): BE, CH, DE, FR, GB, IT, LI, NL, SE)

1. Wasserverdünnbare, kathodisch abscheidbare Elektrotauchlacke, dadurch gekennzeichnet, daß sie als Bindemittel in partiell oder vollständig neutralisierter Form
(A) 70 bis 99,5 Gew.-%, vorzugsweise 80 bis 95 Gew.-%, eines kationischen filmbildenden Harzes sowie eines gegebenenfalls anteilig vorhandenen Zusatzharzes und/oder Pigmentanreibeharzes und
(B) 0,5 bis 30 Gew.-%, vorzugsweise 5 bis 20 Gew.-%, eines Umsetzungsproduktes eines Tetraalkylorthotitanates und/oder eines Titanacetylacetonates mit NH-funktionellen β-Hydroxyalkylaminverbindungen und anschließender Reaktion mit Formaldehyd unter Entfernung des entstehenden Alkohols und/oder Acetylacetons
enthalten, mit der Maßgabe, daß der Titangehalt der Kombination, bezogen auf Bindemittelfestkörpergehalt, 0,03 bis 3,0, vorzugsweise 0,1 bis 1,0, Gew.-% beträgt.

2. Wasserverdünnbare, kathodisch abscheidbare Elektrotauchlacke nach Anspruch 1, dadurch gekennzeichnet, daß als NH-funktionelle β-Hydroxyalkylaminverbindungen für die Komponente (B) Monomethylethanolamin und dessen Homologe eingesetzt wurden.

3. Wasserverdünnbare, kathodisch abscheidbare Elektrotauchlacke nach Anspruch 1, dadurch gekennzeichnet, daß als NH-funktionelle β-Hydroxyalkylaminverbindungen für den Komponente (B) Umsetzungsprodukte von primären Monoaminen, Diaminen oder Polyaminen mit Epoxidverbindungen eingesetzt wurden.

4. Wasserverdünnbare, kathodisch abscheidbare Elektrotauchlacke nach Anspruch 1, dadurch gekennzeichnet, daß als NH-funktionelle β-Hydroxyalkylaminverbindungen für die Komponente (B) Umsetzungsprodukte von primären Alkanolaminen mit Acrylatverbindungen eingesetzt wurden.

5. Wasserverdünnbare, kathodisch abscheidbare Elektrotauchlacke nach den Ansprüchen 1 bis 4, dadurch gekennzeichnet, daß als Titanverbindungen für die Komponente (B) Tetraalkylorthotitanate oder Titanacetylacetonate der allgemeinen Formel Ti (O-alkyl)ₙ(acetylacetonat)₂ (n = 0 oder 2) eingesetzt wurden.

6. Verfahren zur Herstellung von wasserverdünnbaren, kathodisch abscheidbaren Elektrotauchlacken nach den Ansprüchen 1 bis 5, dadurch gekennzeichnet, daß die Zugabe der Komponente (B) zu einer wasserfreien Form der Komponente (A) oder zu einem mitverwendeten Zusatzharz oder Pigmentanreibeharz erfolgt.

7. Verfahren zur Herstellung von wasserverdünnbaren, kathodisch abscheidbaren Elektrotauchlacken nach den Ansprüchen 1 bis 5, dadurch gekennzeichnet, daß bei Anwesenheit von protonierbaren Gruppen in der Komponente (B) die Zugabe der protonierten Komponente (B) in einer wäßrigen und/oder lösemittelhältigen Form, gegebenenfalls während des Betriebes des ETL-Bades, erfolgt.

## Patentansprüche (Patentansprüche für folgende(n) Vertragsstaat(en): ES)

1. Verfahren zur Herstellung von wasserverdünnbaren, kathodisch abscheidbaren Elektrotauchlacken, dadurch gekennzeichnet, daß man als Bindemittel in partiell oder vollständig neutralisierter Form eine Mischung von
(A) 70 bis 99,5 Gew.-%, vorzugsweise 80 bis 95 Gew.-%, eines kationischen filmbildenden Harzes sowie eines gegebenenfalls anteilig vorhandenen Zusatzharzes und/oder Pigmentanreibeharzes, und
(B) 0,5 bis 30 Gew.-%, vorzugsweise 5 bis 20 Gew.-%, eines Umsetzungsproduktes eines Tetraalkylorthotitanates und/oder eines Titanacetylacetonates mit NH-funktionellen β-Hydroxylaminverbindungen und anschließender Reaktion mit Formaldehyd unter Entfernung des entstehenden Alkohols und/oder Acetylacetons
einsetzt, mit der Maßgabe, daß der Titangehalt der Kombination, bezogen auf Bindemittelfestkörpergehalt, 0,03 bis 3,0, vorzugsweise 0,1 bis 1,0, Gew.-% beträgt.

2. Verfahren nach Anspruch 1, dadurch gekennzeichnet, daß man als Komponente (B) ein Produkt einsetzt, für dessen Herstellung als NH-funktionelle β-Hydroxyalkylaminverbindungen Monomethylethanolamin und dessen Homologe verwendet wurden.

3. Verfahren nach Anspruch 1, dadurch gekennzeichnet, daß man als Komponente (B) ein Produkt einsetzt, für dessen Herstellung als NH-funktionelle β-Hydroxyalkylaminverbindungen Umsetzungsprodukte von primären Monoaminen, Diaminen oder Polyaminen mit Epoxidverbindungen verwendet wurden.

4. Verfahren nach Anspruch 1, dadurch gekennzeichnet, daß man als Komponente (B) ein Produkt einsetzt, für dessen Herstellung als NH-funktionelle β-Hydroxyalkylaminverbindungen Umsetzungsprodukte von primären Alkanolaminen mit Acrylatverbindungen verwendet wurden.

5. Verfahren nach den Ansprüchen 1 bis 4, dadurch gekennzeichnet, daß man als Komponente (B) ein Produkt einsetzt, für dessen Herstellung als Titanverbindungen Tetraalkylorthotitanate oder Titanacetylacetonate der allgemeinen Formel Ti (O-alkyl)ₙ(acetylacetonat)₂ (n = 0 oder 2) verwendet wurden.

6. Verfahren nach den Ansprüchen 1 bis 5, dadurch gekennzeichnet, daß die Zugabe der Komponente (B) zu einer wasserfreien Form der Komponente (A) oder zu einem mitverwendeten Zusatzharz oder Pigmentanreibeharz erfolgt.

7. Verfahren nach den Ansprüchen 1 bis 5, dadurch gekennzeichnet, daß bei Anwesenheit von protonierbaren Gruppen in der Komponente (B) die Zugabe der protonierten Komponente (B) in einer wäßrigen und/oder lösemittelhältigen Form, gegebenenfalls während des Betriebes des ETL-Bades, erfolgt.

## Claims (Claims for the following Contracting State(s): BE, CH, DE, FR, GB, IT, LI, NL, SE)

1. Water-thinnable cathodic electrodeposition coatings, characterized in that they contain, as binder, in partially or wholly neutralized form
(A) from 70 to 99.5% by weight, preferably from 80 to 95% by weight, of a cationic film-forming resin and of an additional resin and/or pigment grinding resin which may be present in proportion, and
(B) from 0.5 to 30% by weight, preferably from 5 to 20% by weight, of a product of the reaction of a tetraalkyl orthotitanate and/or of a titanium acetylacetonate with NH-functional β-hydroxyalkylamine compounds and subsequent reaction with formaldehyde, with the removal of the alcohol and/or acetylacetone formed,
with the proviso that the titanium contents of the combination, based on the binder solids content, is from 0.03 to 3.0% by weight, preferably from 0.1 to 1.0% by weight.

2. Water-thinnable cathodic electrodeposition coatings according to Claim 1, characterized in that the NH-functional β-hydroxyalkylamine compounds employed for component (B) were monomethylethanolamine and its homologues.

3. Water-thinnable cathodic electrodeposition coatings according to Claim 1, characterized in that the NH-functional β-hydroxyalkylamine compounds employed for component (B) were reaction products of primary monoamines, diamines or polyamines with epoxide compounds.

4. Water-thinnable cathodic electrodeposition coatings according to Claim 1, characterized in that the NH-functional β-hydroxyalkylamine compounds employed for component (B) were reaction products of primary alkanolamines with acrylate compounds.

5. Water-thinnable cathodic electrodeposition coatings according to Claims 1 to 4, characterized in that the titanium compounds employed for component (B) were tetraalkyl orthotitanates or titanium acetylacetonates of the general formula Ti(O-alkyl)ₙ(acetylacetonate)₂ (n = 0 or 2).

6. Process for the production of water-thinnable cathodic electrodeposition coatings according to Claims 1 to 5, characterized in that the addition of component (B) is made to an anhydrous form of component (A) or to an additional resin or pigment grinding resin which is also used.

7. Process for the production of water-thinnable cathodic electrodeposition coatings according to Claims 1 to 5, characterized in that, in the presence of groups in component (B) which are capable of undergoing protonation, the addition of the protonated component (B) is effected in an aqueous and/or solvent-containing form, if desired during the operation of the electrodeposition bath.

## Claims (Claims for the following Contracting State(s): ES)

1. Process for the production of water-thinnable cathodic electrodeposition coatings, characterized in that the binder employed in partially or wholly neutralized form is a mixture of
(A) from 70 to 99.5% by weight, preferably from 80 to 95% by weight, of a cationic film-forming resin and of an additional resin and/or pigment grinding resin which may be present in proportion, and
(B) from 0.5 to 30% by weight, preferably from 5 to 20% by weight, of a product of the reaction of a tetraalkyl orthotitanate and/or of a titanium acetylacetonate with NH-functional β-hydroxyalkylamine compounds and subsequent reaction with formaldehyde, with the removal of the alcohol and/or acetylacetone formed,
with the proviso that the titanium contents of the combination, based on the binder solids content, is from 0.03 to 3.0% by weight, preferably from 0.1 to 1.0% by weight.

2. Process according to Claim 1, characterized in that, in the preparation of the product employed as component (B), the NH-functional β-hydroxyalkylamine compounds used were monomethylethanolamine and its homologues.

3. Process according to Claim 1, characterized in that, in the preparation of the product employed as component (B), the NH-functional β-hydroxyalkylamine compounds used were reaction products of primary monoamines, diamines or polyamines with epoxide compounds.

4. Process according to Claim 1, characterized in that, in the preparation of the product employed as component (B), the NH-functional β-hydroxyalkylamine compounds used were reaction products of primary alkanolamines with acrylate compounds.

5. Process according to Claims 1 to 4, characterized in that, in the preparation of the product employed as component (B), the titanium compounds used were tetraalkyl orthotitanates or titanium acetylacetonates of the general formula Ti (O-alkyl)ₙ(acetylacetonate)₂ (n = 0 or 2).

6. Process according to Claims 1 to 5, characterized in that the addition of component (B) is made to an anhydrous form of component (A) or to an additional resin or pigment grinding resin which is also used.

7. Process according to Claims 1 to 5, characterized in that, in the presence of groups in component (B) which are capable of undergoing protonation, the addition of the protonated component (B) is effected in an aqueous and/or solvent-containing form, if desired during the operation of the electrodeposition bath.

## Revendications (Revendications pour l'(les) Etat(s) contractant(s) suivant(s): BE, CH, DE, FR, GB, IT, LI, NL, SE)

1. Peintures électrophorétiques déposables à la cathode, diluables à l'eau, caractérisées en ce qu'elles contiennent comme liant sous forme partiellement ou totalement neutralisée
(A) 70 à 99,5% en poids, de préférence 80 à 95% en poids, d'une résine cationique filmogène ainsi que d'une résine ajoutée présente éventuellement de manière proportionnelle et/ou d'une résine de broyage de pigment, et
(B) 0,5 à 30% en poids, de préférence 5 à 20% en poids, d'un produit de réaction d'un orthotitanate de tétraalkyle et/ou d'un acétylacétonate de titane avec des composés β-hydroxyalkylaminés NH-fonctionnels puis de réaction avec le formaldéhyde avec élimination de l'alcool formé et/ou de l'acétylacétone formée,
à condition que la teneur en titane de la combinaison, rapportée à la teneur en solides du liant, soit de 0,03 à 3,0, de préférence de 0,1 à 1,0% en poids.

2. Peintures électrophorétiques déposables à la cathode, diluables à l'eau, selon la revendication 1, caractérisées en ce que la monométhyléthanolamine et ses homologues ont été utilisés comme composés β-hydroxyalkylaminés NH-fonctionnels pour le constituant (B).

3. Peintures électrophorétiques déposables à la cathode, diluables à l'eau, selon la revendication 1, caractérisées en ce que des produits de réaction de monoamines, diamines ou polyamines primaires avec des composés époxydiques ont été utilisés comme composés β-hydroxyalkylaminés NH-fonctionnels pour le constituant (B).

4. Peintures électrophorétiques déposables à la cathode, diluables à l'eau, selon la revendication 1, caractérisées en ce que des produits de réaction d'alcanolamines primaires avec des composés d'acrylate ont été utilisés comme composés β-hydroxyalkylaminés NH-fonctionnels pour le constituant (B).

5. Peintures électrophorétiques déposables à la cathode, diluables à l'eau, selon les revendications 1 à 4, caractérisées en ce que des orthotitanates de tétraalkyle ou des acétylacétonates de titane de formule générale Ti(O-alkyl)ₙ(acétylacétonate)₂ (n = 0 ou 2) ont été utilisés comme composés du titane pour le constituant (B).

6. Procédé de préparation de peintures électrophorétiques déposables à la cathode, diluables à l'eau, selon les revendications 1 à 5, caractérisé en ce que l'addition du constituant (B) a lieu à une forme anhydre du constituant (A) ou à une résine ajoutée ou une résine de broyage de pigment utilisée conjointement.

7. Procédé de préparation de peintures électrophorétiques déposables à la cathode, diluables à l'eau, selon les revendications 1 à 5, caractérisé en ce que, en présence de groupes protonables dans le constituant (B), l'addition du constituant (B) protoné a lieu sous une forme aqueuse et/ou contenant un solvant, éventuellement au cours de l'exploitation du bain de trempage électrophorétique.

## Revendications (Revendications pour l'(les) Etat(s) contractant(s) suivant(s): ES)

1. Procédé de préparation de peintures électrophorétiques déposables à la cathode, diluables à l'eau, caractérisé en ce que l'on utilise comme liant sous forme partiellement ou totalement neutralisée
(A) 70 à 99,5% en poids, de préférence 80 à 95% en poids, d'une résine cationique filmogène ainsi que d'une résine ajoutée présente éventuellement de manière proportionnelle et/ou d'une résine de broyage de pigment, et
(B) 0,5 à 30% en poids, de préférence 5 à 20% en poids, d'un produit de réaction d'un orthotitanate de tétraalkyle et/ou d'un acétylacétonate de titane avec des composés β-hydroxyalkylaminés NH-fonctionnels puis de réaction avec le formaldéhyde avec élimination de l'alcool formé et/ou de l'acétylacétone formée,
à condition que la teneur en titane de la combinaison, rapportée à la teneur en solides du liant, soit de 0,03 à 3,0, de préférence de 0,1 à 1,0% en poids.

2. Procédé selon la revendication 1, caractérisé en ce que l'on utilise comme constituant (B) un produit pour la préparation duquel on a utilisé la monométhyléthanolamine et ses homologues comme composés β-hydroxyalkylaminés NH-fonctionnels.

3. Procédé selon la revendication 1, caractérisé en ce que l'on utilise comme constituant (B) un produit pour la préparation duquel on a utilisé des produits de réaction de monoamines, diamines ou polyamines primaires avec des composés époxydiques comme composés β-hydroxyalkylaminés NH-fonctionnels.

4. Procédé selon la revendication 1, caractérisé en ce que l'on utilise comme constituant (B) un produit pour la préparation duquel on a utilisé des produits de réaction d'alcanolamines primaires avec des composés d'acrylate comme composés β-hydroxyalkylaminés NH-fonctionnels.

5. Procédé selon les revendications 1 à 4, caractérisé en ce que l'on utilise comme constituant (B) un produit pour la préparation duquel on a utilisé des orthotitanates de tétraalkyle ou des acétylacétonates de titane de formule générale Ti(O-alkyl)ₙ(acétylacétonate)₂ (n = 0 ou 2) comme composés du titane.

6. Procédé selon les revendications 1 à 5, caractérisé en ce que l'addition du constituant (B) a lieu à une forme anhydre du constituant (A) ou à une résine ajoutée ou une résine de broyage de pigment utilisée conjointement.

7. Procédé selon les revendications 1 à 5, caractérisé en ce que, en présence de groupes protonables dans le constituant (B), l'addition du constituant (B) protoné a lieu sous une forme aqueuse et/ou contenant un solvant, éventuellement au cours de l'exploitation du bain de trempage électrophorétique.
